# EUROPEAN PATENT APPLICATION

(11) **EP 3 594 820 A1**
(43) Date of publication of application: **15.01.2020**
(21) Application number: 18815932.1
(22) Date of filing: 09.05.2018
(51) Int. Cl.: G06F 16/00

(54) **FILE READING METHOD AND APPLICATION ENTITY**

(30) Priority: 10.04.2018 CN 201810315489
(71) Applicant: Wangsu Science & Technology Co., Ltd., Shanghai 200030 (CN)
(72) Inventor: XIE, Wenyu, Xuhui District Shanghai 20030 (CN); XIE, Jiaxiang, Xuhui District Shanghai 20030 (CN)
(74) Representative: Hanna Moore + Curley
(86) International application number: PCT/CN2018/086179
(87) International publication number: WO 2019/196157

(57) **Abstract**

The present disclosure describes a file reading method and an application entity for improving file reading efficiency. The method includes: sending, by the application entity, a read request to a file system; when the application entity receives a first error response returned by the file system, determining, by the application entity, a file source of the target file and obtaining the target file from the file source; and sending, by the application entity, a write request to the file system, where the write request is used to instruct the file system to re-store the target file according to a replacement storage path. After the application entity receives the first error response, the file system re-stores the target file. Since the damaged storage space is occupied, the file system does not store the re-stored target file in the damaged storage space. When the application entity sends a read request to the file system again, the file system may open and read the target file from the replacement storage path, thereby increasing the file reading rate.

## Description

### FIELD OF DISCLOSURE

The present disclosure generally relates to the field of data storage technology and, more particularly, relates to a file reading method and an application entity thereof.

### BACKGROUND

Caching refers to a technology that increases the speed of content access by storing network content that requires frequent access in a disk of a system that is closer to the user and has a faster access speed.

However, since cache files require frequent writing and reading, disks that hold cache files often operate at high loads, causing disk track damage to occur frequently. If a file is read from a damaged track, a partial content of the file may be incorrect, and thus the file may not be read. This will affect the reading efficiency of the stored file, and does not facilitate the improvement of user experience. Also, when a cache file may not be read, the file system will repeatedly attempt to read the cache file from the disk by default, further deteriorating the load of the disk, thereby further reducing the reading efficiency of the stored files.

### BRIEF SUMMARY OF THE DISCLOSURE

The present disclosure provides a file reading method and an application entity thereof for improving file reading efficiency.

In a first aspect, the present disclosure provides a file reading method for application in a storage device comprising an application entity and a file system. The method includes:
sending, by the application entity, a read request to the file system, where the read request includes a storage path of a target file, and the read request is used to instruct the file system to open and read the target file according to the storage path of the target file;
when the application entity receives a first error response returned by the file system, determining, by the application entity, a file source of the target file, and obtaining the target file from the file source, where the first error response is returned to the application entity when the file system fails to read the target file; and
sending, by the application entity, a write request to the file system, where the write request includes the target file and a replacement storage path of the target file, and the write request is used to instruct the file system to re-store the target file according to the replacement storage path.

After the application entity sends a read request to the file system, the file system opens and reads the target file according to the storage path of the target file in the read request. When the file system fails to read the target file, it indicates that the storage space that stores the target file is damaged. The file system returns a first error response to the application entity. After receiving the first error response, the application entity obtains the target file from the file source of the target file, and sends the target file and the replacement storage path to the file system. The file system re-stores the target file. Since the damaged storage space is already occupied, the file system does not store the re-stored target file in the damaged storage space. When the application entity sends a read request to the file system to read the target file again, the file system may open and read the target file from the replacement storage path without repeatedly reading the target file from the damaged storage space, thereby increasing the file reading rate.

Optionally, the application entity includes a path set, where the path set includes identifiers of a plurality of stored files and a storage path of each of the plurality of stored files;
before sending, by the application entity, the read request to the file system, the method further includes:
determining, by the application entity, a corresponding storage path in the path set according to a file identifier of the target file; and
after sending, by the application entity, the write request to the file system, the method further includes:
   saving, by the application entity, a correspondence between the file identifier of the target file and the replacement storage path in the path set.

The application entity saves the storage path of each stored file in the path set. When the stored target file is read, the storage path corresponding to the file identifier of the target file is determined from the path set. The storage path is forwarded to the file system through the read request, so that the file system may open and read the target file according to the storage path. After rewriting the target file, the application entity also saves a correspondence between the file identifier of the target file and the replacement storage path to the path set. When the target file is read next time, the re-stored target file may be obtained by reading from the replacement storage path.

Optionally, the file system includes a top-level directory and a bad track file directory corresponding to the target file;
before sending, by the application entity, the write request to the file system, the method further includes:
sending, by the application entity, a migration instruction to the file system, where the migration instruction includes the file identifier of the target file, and an identifier of the top-level directory and an identifier of the bad track file directory that correspond to the target file, and the migration instruction is used to instruct the file system to delete a correspondence between the target file and the top-level directory, and to build a correspondence between the target file and the bad track file directory.

The file system opens and reads the target file according to the top-level directory directed to by the storage path of the target file. After re-storing the target file, the application entity directs the replacement path of the re-stored target file to the original top-level directory through the migration instruction, and directs the storage path of the damaged original target file to the bad track file directory. When the file system sends a read request including the storage path of the target file next time, the file system may not open the target file that is already unreadable.

Optionally, before saving, by the application entity, the correspondence between the target file and the replacement storage path in the path set, the method further includes:
renaming, by the application entity, the file identifier of the target file in the path set.

The application entity renames the damaged target file in the path set. When the target file is read next time, since the damaged target file is renamed, what is determined, by the application entity, from the path set based on the file identifier of the target file is the re-stored target file and its corresponding replacement storage path.

Optionally, the method further includes:
when the application entity receives a second error response returned by the file system, saving, by the application entity, the storage path of the target file into a log file, where the second error response is returned to the application entity when the file system fails to open the target file.

The file system needs to open the target file before it can read the target file. When the file system fails to open the target file, a second error response is returned to the application entity. After receiving the second error response, the application entity may confirm that the target file may not be opened. Accordingly, the storage path of the target file is recorded into the log file to allow the operation and maintenance personnel to inspect the problem.

In a second aspect, the present disclosure provides an application entity for application in a storage device comprising the application entity and a file system. The application entity comprises:
a transceiving unit that is configured to send a read request to the file system, where the read request includes a storage path of the target file, and the read request is used to instruct the file system to open and read the target file according to the storage path of the target file;
a processing unit that is configured to, when the transceiving unit receives a first error response returned by the file system, determine a file source of the target file, and obtain the target file from the file source, where the first error response is returned to the application entity when the file system fails to read the target file; and
the processing unit is further configured to send a write request to the file system through the transceiving unit, where the write request includes the target file and a replacement storage path of the target file, and the write request is used to instruct the file system to re-store the target file according to the replacement storage path.

Optionally, the processing unit includes a path set, where the path set includes file identifiers of a plurality of stored files and a storage path of each of the plurality of stored files;
the processing unit is further configured to:
determine a corresponding storage path in the path set according to a file identifier of the target file; and
the processing unit is further configured to:
save a correspondence between the file identifier of the target file and the replacement storage path in the path set.

Optionally, the file system includes a top-level directory and a bad track file directory corresponding to the target file; and
the processing unit is further configured to:
send a migration instruction to the file system through the transceiving unit, where the migration instruction includes the file identifier of the target file, and an identifier of the top-level directory and an identifier of the bad track file directory that correspond to the target file, and the migration instruction is used to instruct the file system to delete a correspondence between the target file and the top-level directory, and to build a correspondence between the target file and the bad track file directory.

Optionally, the processing unit is further configured to:
rename the file identifier of the target file in the path set.

Optionally, the processing unit is further configured to:
when the transceiving unit receives a second error response returned by the file system, save the storage path of the target file into a log file, where the second error response is returned to the application entity when the file system fails to open the target file.

In a third aspect, the present disclosure provides a storage device comprising a file system and the application entity according to any one of the second aspect.

In a fourth aspect, the present disclosure provides a computer readable storage medium for application in a computer comprising an application entity and a file system, where the computer readable storage medium stores computer executable instructions that cause the application entity and the file system of the computer to implement the method according to any one of the first aspect.

### BRIEF DESCRIPTION OF THE DRAWINGS

To make the technical solutions in the embodiments of the present disclosure more clear, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a logical relationship of an application entity, a file system, and a disk in a storage device;
FIG. 2 is a flowchart of a file reading method according to some embodiments of the present disclosure;
FIG. 3 is a flowchart of one part of an executable file reading method according to some embodiments of the present disclosure;
FIG. 4 is a flowchart of another part of an executable file reading method according to some embodiments of the present disclosure; and
FIG. 5 is a schematic structural diagram of an application entity according to some embodiments of the present disclosure.

### DETAILED DESCRIPTION

To make the objective, technical solutions, and advantages of the present disclosure more clear, the present disclosure will be made in detail hereinafter with reference to the accompanying drawings. It is to be understood that the disclosed embodiments are merely some, but not all, embodiments of the present disclosure. All other embodiments obtained by those skilled in the art based on the embodiments of the present disclosure without creative efforts fall within the protection scope of the present disclosure.

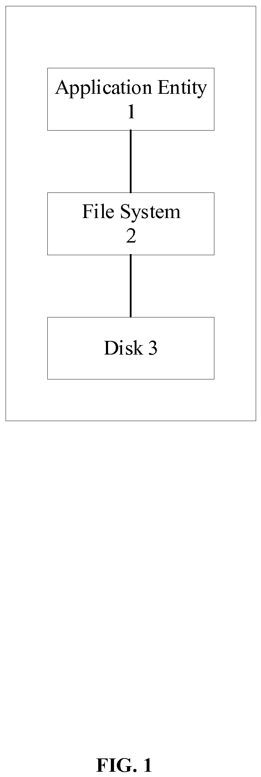

To improve the reading efficiency of stored files, one embodiment of the present disclosure provides a file reading method. Here, the stored files are stored in the storage devices. The storage devices may be an electronic device having file storage and reading functions, such as a network server, a personal computer, or a mobile terminal. In a storage device, an application entity needs to store and read files through a file system. FIG. 1 is a schematic diagram of a logical relationship of an application entity, a file system, and a disk in a storage device. As shown in FIG. 1, the application entity 1 may interact with the file system 2, and the file system 2 directly manages the disk 3. In general, the application entity 1, also called "application layer," may provide application services for users. The file system 2 is a system in an operating system that is specifically responsible for managing and storing the file information, and generally does not change at will. In the existing technologies, when an application entity 1 reads a file in the disk 3, it sends a read request to the file system 2. After receiving the read request, the file system 2 opens and reads the file in the disk 3. When the file system 2 cannot open or read a file in the disk 3, the file system will attempt to open or read the file multiple times, which increases the load on the disk 3.

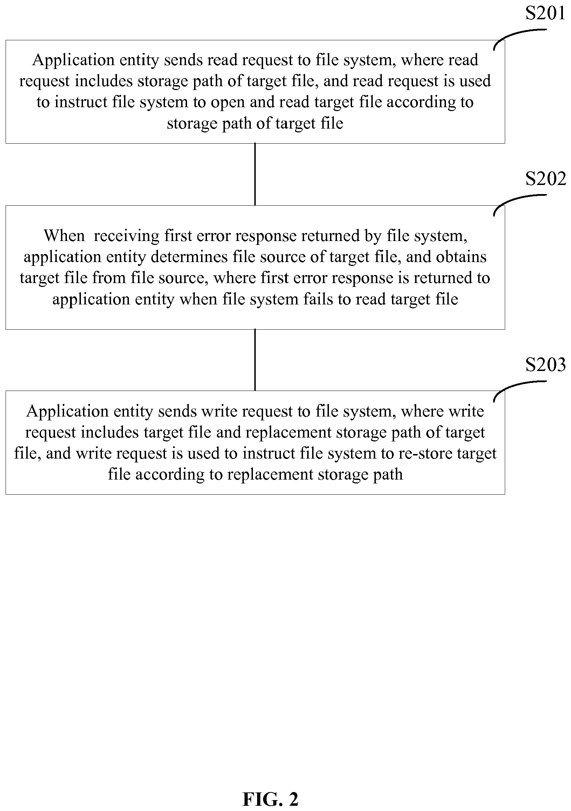

Based on the storage device shown in FIG. 1, embodiments of the present disclosure provides a file reading method. FIG. 2 is a flowchart of a file reading method according to some embodiments of the present disclosure. As shown in FIG. 2, the method includes the following steps.

S201: the application entity sends a read request to the file system, where the read request includes a storage path of a target file, and the read request is used to instruct the file system to open and read the target file according to the storage path of the target file.

S202: when receiving a first error response returned by the file system, the application entity determines a file source of the target file and obtains the target file from the file source, where the first error response is returned to the application entity when the file system fails to read the target file.

S203: the application entity sends a write request to the file system, where the write request includes the target file and a replacement storage path of the target file, and the write request is used to instruct the file system to re-store the target file according to the replacement storage path.

In S201, the storage path of the target file is saved by the application entity when storing the target file. Optionally, the application entity includes a path set, where the path set includes file identifiers of a plurality of stored files and a storage path of each of the plurality of stored files. Before sending the read request to the file system, the application entity determines the corresponding storage path in the path set according to the file identifier of the target file. After that, the application entity may send the storage path to the file system through the read request, to allow the file system to open and read the target file according to the storage path.

After the storage path of the target file is obtained, a read request is generated and sent to the file system. In general, a read request includes an open request and an I/O request. The application entity first sends an open request to the file system, where the open request includes a storage path of the target file, and is used to instruct the file system to open the target file. After successfully opening the target file, the file system will return a file descriptor of the target file to the application entity. The application entity sends an I/O request to the file system again, where the I/O request includes the file descriptor of the target file that instructs the file system to read the target file.

In S202, if the file system fails to read the target file, a first error response, which may generally be an EIO (Error I/O) message, is returned to the application entity. EIO message is an existing message type. When reading the file content, if the content happens to be on a bad track, the file system will return a file error, i.e., an EIO error. For instance, the operation and maintenance personnel will inspect the files on the disk through some control programs (cp programs). A cp program will copy the files on the disk. When a target file may not be read, the cp program will receive an EIO message at the file system layer. In the embodiments of the present disclosure, the application entity may also receive a first error response returned by the file system when the file system may not read a target file.

When receiving the first error response returned by the file system, the application entity may determine that the target file is unreadable at this moment based on the first error response. Optionally, when receiving the first error response, the application entity may determine whether the number of times N of consecutively received first error response for the target file exceeds a preset threshold. If N exceeds the preset threshold, it may be determined that the track that stores the target file is damaged. Here, N is greater than or equal to 1. The preset threshold may be set to different values based on the actual situations, which the present disclosure is not intended to limit. The application entity, in turn, determines the file source of the target file and obtains the target file from the file source. In the embodiments of the present disclosure, the target file may be sent by another device to the storage device, or may be generated by the storage device itself. If the target file is sent by another device to the storage device, the storage device sends a request message to the file source, so that the file source re-delivers the target file to the storage device. If the target file is generated by the storage device itself, the storage device traces back the system log and re-generates the target file.

In S203, after the application entity re-acquires the target file from the file source, the target file and the replacement storage path of the target file are sent to the file system through the write request. The file system may re-store the target file according to the replacement storage path. Optionally, after the application entity sends the write request to the file system, a correspondence between the file identifier of the target file and the replacement storage path is also saved in the path set. After rewriting the target file, the application entity also saves the correspondence between the file identifier of the target file and the replacement storage path to the path set. When the target file is read next time, the replacement storage path may be obtained, and thus the re-stored target file is read.

After the application entity sends a read request to the file system, the file system opens and reads the target file according to the storage path of the target file in the read request. When the file system fails to read the target file, it indicates that the storage space for storing the target file has been damaged. The file system returns a first error response to the application entity. After receiving the first error response, the application entity obtains the target file from the file source of the target file, and sends the target file and the replacement storage path to the file system. The file system re-stores the target file. Since the damaged storage space has already been occupied, the file system will not store the re-stored target file in the damaged storage space. When the application entity sends a read request to the file system to read the target file again, the file system may open and read the target file from the replacement storage path without repeatedly reading the target file from the damaged storage space, thereby increasing the file reading rate.

The file system includes multiple file directories, and each file storage path has a corresponding top-level directory. When the file system opens a target file, the file system first determines the top-level directory corresponding to the target file, and finds, in the top-level directory, a file descriptor corresponding to the target file through multiple sub-levels. Optionally, the file system further includes at least one bad track file directory. Before the application entity sends a write request to the file system, the following process may be included: the application entity sends a migration instruction to the file system, where the migration instruction includes the file identifier of the target file, and an identifier of the top-level directory and an identifier of the bad track file directory that correspond to the target file. After receiving the migration instruction, the file system may delete the correspondence between the target file and the top-level directory, so that the storage path of the target file no longer directs to the top-level directory. At the same time, the file system also builds a correspondence between the target file and the bad track file directory, so that the storage path of the target file directs to the bad track file directory. When the read request is sent to the file system again using the original storage path of the target file, the file system may not find the file descriptor of the target file through the top-level directory, and thus may not open the target file. When the read request is sent to the file system using the replacement storage path of the target file, the file descriptor of the re-stored target file may be properly obtained, and thus the re-stored target file is opened.

If the application entity saves the re-stored target file and the replacement storage path to the path set, it may lead the correspondences between the two same file identifier and two different storage paths to be saved in the path set. This will cause inconvenience when the target file is read next time. Optionally, before the application entity saves the correspondence between the target file and the replacement storage path in the path set, the file identifier of the target file in the path set is renamed first. The re-stored target file may continue to use the original file identifier without affecting the subsequent operation process. The application entity renames the damaged target file in the path set. When the target file is read next time, since the damaged target file is renamed, what is determined, by the application entity, from the path set based on the file identifier of the target file is the re-stored target file and its corresponding replacement storage path.

It can be seen from the above that the file system needs to open a target file before the target file may be read. When the file system cannot open the target file, the file system will return a second error response, which may generally be an ENOENT response. Normally, after a disk is formatted, opening a file requires a search of the index of the file on the disk. The index file may be simply considered as the file path. If the information of the index file happens to be located in a bad track, when opening the file, the system will return "the file does not exist," i.e., an ENOENT response. However, for an application entity, when receiving a second error response, it may determine that the file system did not open the target file, but may not determine whether the problem is due to track damage or file loss. Therefore, optionally, when receiving a second error response returned by the file system, the application entity saves the storage path of the target file into a log file. The application entity records the storage path of the target file into the log file if the track may not be confirmed to be damaged, so that the operation and maintenance personnel may inspect the problem.

In the disclosed embodiments of the present disclosure, the unreadable file remains occupying the damaged track and will not be accessed, thereby achieving a goal of isolating the damaged track. However, in the actual services, a single file may reach the GB level. As the services continue to grow, the occupied storage space by the unreadable files will become larger and larger. Optionally, when a disk has a self-healing function, the files in the damaged tracks may be periodically cleaned. This will trigger the self-healing mechanism of the disk, to allow the disk to release the spare space to make up for the storage space of the damaged track.

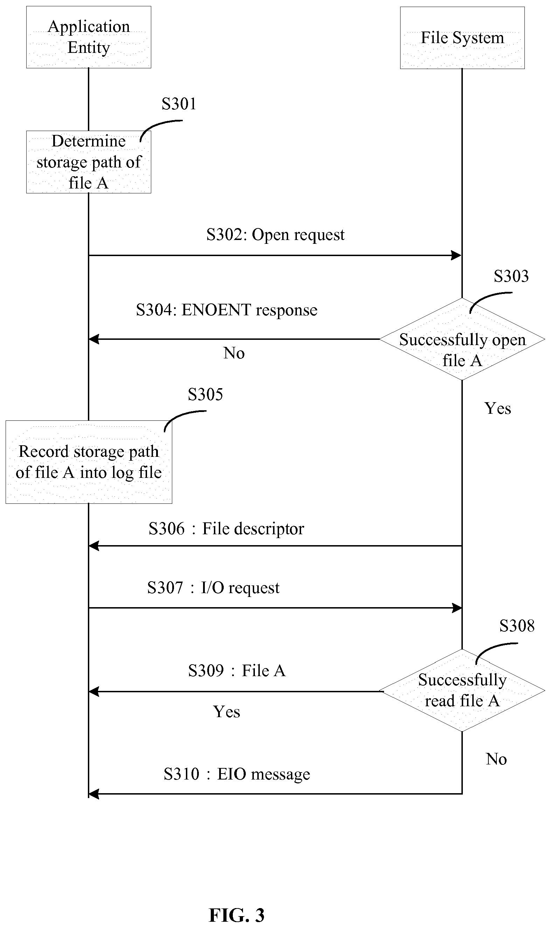

To make the file reading method provided by the embodiments of the present disclosure more clear, the embodiments of the present disclosure provides a concrete and executable implementation. FIG. 3 is a flowchart of one part of an executable file reading method according to some embodiments of the present disclosure. An application entity may determine whether the storage space occupied by a target file is damaged by using the method illustrated in FIG. 3. As shown in FIG. 3, the following steps are included.

S301: the application entity determines a storage path of the target file, file A, in the path set.

S302: the application entity sends an open request to the file system, where the open request includes the storage path of the file A.

S303: the file system opens the file A in the disk according to the storage path of the file A. If the file A is successfully opened, proceed to S306; if the file A fails to open, proceed to S304.

S304: When the file system fails to open the file A, the file system sends an ENOENT response to the application entity.

S305: After receiving the ENOENT response, the application entity records the storage path of the file A into a log file for inspection by the operation and maintenance personnel.

S306: When the file system successfully opens the file A, the file system sends the file descriptor of the file A to the application entity.

S307: The application entity sends an I/O request to the file system, where the I/O request includes the file descriptor of the file A.

S308: After receiving the I/O request, the file system reads the file A from the disk according to the file descriptor of the file A. If the reading is successful, proceed to S309; if the reading fails, proceed to S310.

S309: when the file system reads the file A successfully, the file A is sent to the application entity.

S310: when the file system fails to read the file A, an EIO message is returned to the application entity. After the application entity receives the EIO message, it may be determined that the storage space for storing the file A is damaged.

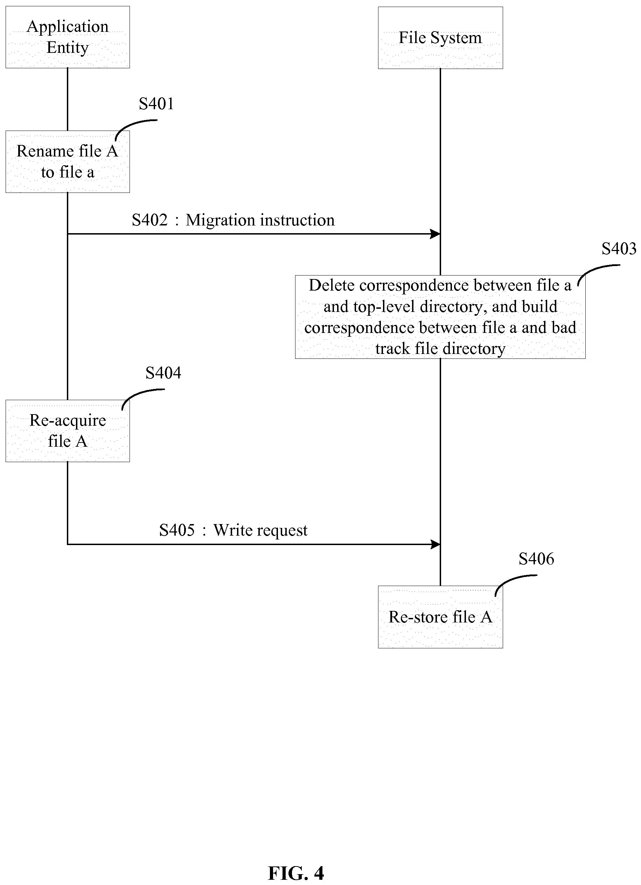

After the application entity determines that the storage space for storing the file A has been damaged, a flowchart shown in FIG. 4 may be continued. FIG. 4 is a flowchart of another part of an executable file reading method according to some embodiments of the present disclosure. The flowchart shown in FIG. 4 may isolate the damaged storage space and improve file reading efficiency. As shown in FIG. 4, the following steps are included.

S401: the application entity renames the file A in the path set to file a.

S402: the application entity sends a migration instruction to the file system, where the migration instruction includes an identifier of the file a, and an identifier of the top-level directory and an identifier of the bad track file directory that correspond to the file a .

S403: the file system deletes the correspondence between the file a and the top-level directory in the file system according to the migration instruction, and builds a correspondence between the file a and the bad track file directory.

S404: the application entity re-acquires the file A from the file source of the file A.

S405: the application entity sends a write request to the file system, and sends the re-acquired file A and the replacement storage path to the file system.

S406: the file system re-stores the file A on the disk according to the replacement storage path.

In the file reading methods provided in FIG. 3 and FIG. 4, after the application entity sends a read request to the file system, the file system opens and reads the target file according to the storage path of the file A in the read request. When the file system fails to read the target file, it means that the storage space for storing the file A is damaged. The file system will return a first error response to the application entity. After receiving the first error response, the application entity obtains the file A from the file source of the file A, and sends the file A and the replacement storage path to the file system. The file system re-stores the file A. Since the damaged storage space has already been occupied, the file system will not store the re-stored file A in the damaged storage space. When the application entity sends a read request to the file system to read the file A again, the file system may open and read the target file from the replacement storage path without repeatedly reading the file A in the damaged storage space, thereby improving the file reading rate.

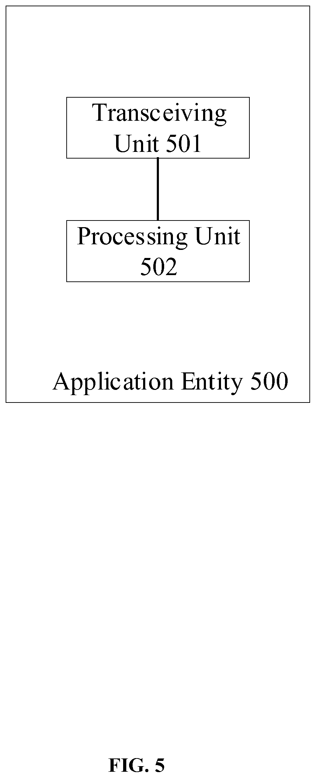

Based on the similar technical concept, the embodiments of the present disclosure further provides an application entity for application in a storage device, where the storage device includes the application entity and a file system. The application entity may implement the file reading method of the stored files disclosed in any of the foregoing embodiments. FIG. 5 is a schematic structural diagram of an application entity according to some embodiments of the present disclosure. As shown in FIG. 5, the application entity 500 includes a transceiving unit 501 and a processing unit 502, where:
the transceiving unit 501 is configured to send a read request to the file system, where the read request includes a storage path of the target file, and the read request is used to instruct the file system to open and read the target file according to the storage path of the target file;
the processing unit 502 is configured to, when the transceiving unit 501 receives a first error response returned by the file system, determine a file source of the target file, and obtain the target file from the file source, where the first error response is returned to the application entity when the file system fails to read the target file; and
the processing unit 502 is further configured to send a write request to the file system through the transceiving unit 501, where the write request includes the target file and a replacement storage path of the target file, and the write request is used to instruct the file system to re-store the target file according to the replacement storage path.

Optionally, the processing unit 502 includes a path set, where the path set includes file identifiers of a plurality of stored files, and a storage path of each of the plurality of stored files; and
the processing unit 502 is further configured to:
determine a corresponding storage path in the path set according to a file identifier of the target file; and
the processing unit 502 is further configured to:
save a correspondence between the file identifier of the target file and the replacement storage path in the path set.

Optionally, the file system includes a top-level directory and a bad track file directory corresponding to the target file; and
the processing unit 502 is further configured to:
send a migration instruction to the file system through the transceiving unit 501, where the migration instruction includes the file identifier of the target file, and an identifier of the top-level directory and an identifier of the bad track file directory that correspond to the target file, and the migration instruction is used to instruct the file system to delete a correspondence between the target file and the top-level directory, and to build a correspondence between the target file and the bad track file directory.

Optionally, the processing unit 502 is further configured to:
rename the file identifier of the target file in the path set.

Optionally, the processing unit 502 is further configured to:
when the transceiving unit 501 receives a second error response returned by the file system, save the storage path of the target file into a log file, where the second error response is returned to the application entity when the file system fails to open the target file.

It is to be understood that the above separation of each unit is merely a separation of logical functions. In real implementations, these units may be integrated into one physical entity in whole or in part, or may be physically separated.

Based on the similar technical concept, the embodiments of the present disclosure provides a storage device comprising a file system and an application entity according to any one of the second aspect. The application entity executes the file reading methods provided by any one of the foregoing embodiments when reading a stored file.

Based on the similar technical concept, the embodiments of the present disclosure provides a computer readable storage medium for application in a computer comprising an application entity and a file system. The computer-readable storage medium stores computer executable instructions and the computer-executable instructions are configured to cause the application entity and the file system in the computer to execute the file reading methods provided by any of the foregoing embodiments.

Although the present disclosure has been described in terms of the preferred embodiments, it is to be understood that, upon an understanding of the principles and creative concepts of the present disclosure, a person with ordinal skills in the art may derive other alterations and modifications. Accordingly, it is intended that the appended claims be interpreted as covering the preferred embodiments and all alterations and modifications made thereupon.

It will be apparent that those skilled in the art may derive various modifications and variations to the present disclosure without departing from the spirit and scope of the present disclosure. Accordingly, it is intended that the present disclosure cover all the alterations and modifications as long as they fall within the equivalent technical scope of the present disclosure.

## Claims

1. A file reading method for application in a storage device comprising an application entity and a file system, the method comprising:
sending, by the application entity, a read request to the file system, wherein the read request includes a storage path of a target file, and the read request is used to instruct the file system to open and read the target file according to the storage path of the target file;
when the application entity receives a first error response returned by the file system, determining, by the application entity, a file source of the target file, and obtaining the target file from the file source, wherein the first error response is returned to the application entity when the file system fails to read the target file; and
sending, by the application entity, a write request to the file system, wherein the write request includes the target file and a replacement storage path of the target file, and the write request is used to instruct the file system to re-store the target file according to the replacement storage path.

2. The method according to claim 1, wherein the application entity includes a path set, and the path set includes identifiers of a plurality of stored files, and a storage path of each of the plurality of stored files;
before sending, by the application entity, the read request to the file system, the method further includes:
determining, by the application entity, a corresponding storage path in the path set according to a file identifier of the target file; and
after sending, by the application entity, the write request to the file system, the method further includes:
saving, by the application entity, a correspondence between the file identifier of the target file and the replacement storage path in the path set.

3. The method according to claim 2, wherein the file system includes a top-level directory and a bad track file directory corresponding to the target file, and before sending, by the application entity, the write request to the file system, the method further includes:
sending, by the application entity, a migration instruction to the file system, wherein the migration instruction includes the file identifier of the target file, and an identifier of the top-level directory and an identifier of the bad track file directory that correspond to the target file, and the migration instruction is used to instruct the file system to delete a correspondence between the target file and the top-level directory, and to build a correspondence between the target file and the bad track file directory.

4. The method according to claim 2, before saving, by the application entity, the correspondence between the target file and the replacement storage path in the path set, the method further includes:
renaming, by the application entity, the file identifier of the target file in the path set.

5. The method according to any one of claims 1 to 4, further comprising:
when the application entity receives a second error response returned by the file system, saving, by the application entity, the storage path of the target file into a log file, wherein the second error response is returned to the application entity when the file system fails to open the target file.

6. An application entity for application in a storage device comprising the application entity and a file system, the application entity comprising:
a transceiving unit that is configured to send a read request to the file system, wherein the read request includes a storage path of the target file, and the read request is used to instruct the file system to open and read the target file according to the storage path of the target file; and
a processing unit that is configured to:
when the transceiving unit receives a first error response returned by the file system, determine a file source of the target file, and obtain the target file from the file source, wherein the first error response is returned to the application entity when the file system fails to read the target file, and
send a write request to the file system through the transceiving unit, wherein the write request includes the target file and a replacement storage path of the target file, and the write request is used to instruct the file system to re-store the target file according to the replacement storage path.

7. The application entity according to claim 6, wherein the processing unit includes a path set, and the path set includes file identifiers of a plurality of stored files and a storage path of each of the plurality of stored files, and the processing unit is further configured to:
determine a corresponding storage path in the path set according to a file identifier of the target file; and
save a correspondence between the file identifier of the target file and the replacement storage path in the path set.

8. The application entity according to claim 7, wherein the file system includes a top-level directory and a bad track file directory corresponding to the target file, and the processing unit is further configured to:
send a migration instruction to the file system through the transceiving unit, wherein the migration instruction includes the file identifier of the target file, and an identifier of the top-level directory and an identifier of the bad track file directory that correspond to the target file, and the migration instruction is used to instruct the file system to delete a correspondence between the target file and the top-level directory, and to build a correspondence between the target file and the bad track file directory.

9. The application entity according to claim 7, wherein the processing unit is further configured to:
rename the file identifier of the target file in the path set.

10. The application entity according to any one of claims 6 to 9, wherein the processing unit is further configured to:
when the transceiving unit receives a second error response returned by the file system, save the storage path of the target file into a log file, wherein the second error response is returned to the application entity when the file system fails to open the target file.

11. A storage device, comprising a file system and the application entity according to any one of claims 6 to 10.

12. A computer-readable storage medium for application in a computer comprising an application entity and a file system, the computer readable storage medium storing computer-executable instructions that cause the application entity and the file system of the computer to implement the method according to any one of claims 1 to 5.
